# EUROPEAN PATENT APPLICATION

(11) **EP 4 614 483 A1**
(43) Date of publication of application: **10.09.2025**
(21) Application number: 25160590.3
(22) Date of filing: 27.02.2025
(51) Int. Cl.: G09C 1/00, H04L 9/08

(54) **INTEGRATED CIRCUIT SUPPORTING PHYSICAL UNCLONABLE FUNCTION, SYSTEM-ON-CHIP INCLUDING THE SAME, AND OPERATION METHOD THEREOF**

(30) Priority: 04.03.2024 KR 20240030904
(71) Applicant: Samsung Electronics Co., Ltd., Suwon-si, Gyeonggi-do 16677 (KR)
(72) Inventor: KANG, Jisu, 16677 Suwon-si (KR); KIM, Gapkyoung, 16677 Suwon-si (KR); LEE, Yongki, 16677 Suwon-si (KR); CHOI, Hongmook, 16677 Suwon-si (KR)
(74) Representative: Marks & Clerk LLP

(57) **Abstract**

The present disclosure relates to integrated circuits including an integrated circuit supporting a physically unclonable function (PUF). An example integrated circuit includes a PUF block including a PUF cell array, and a controller configured to generate a security key based on PUF data that is generated based on the PUF block. The controller is configured to perform an error correction operation on the PUF data to generate an initial key, perform a length extension operation on the initial key to generate an intermediate key, and generate at least one of a plurality of final keys as the security key from the intermediate key.

## Description

### TECHNICAL FIELD

The present invention relates to an integrated circuit for supporting a physically unclonable function (PUF), and to an operation method of an integrated circuit comprising a physically unclonable function (PUF) block.

### BACKGROUND

Recently, as wired and wireless communication technologies and smart device-related technologies have rapidly developed, the demand for building a security system for using such technologies safely is also increasing. Therefore, security technology with a physical unclonable function (PUF) is being spotlighted. A PUF cell refers to a cell that is implemented inside a semiconductor chip by using process deviations occurring in a semiconductor manufacturing process and generates random values that are difficult to predict. When security keys are generated by using a PUF cell, duplication of important keys such as security keys stored in a security device may be fundamentally prevented.

Meanwhile, a security key generated by an integrated circuit supporting the PUF may be determined in an enrollment phase included in a wafer testing phase for PUF cells. Once helper data, which is a result of the enrollment phase, is stored in a non-volatile memory of an integrated circuit, the integrated circuit may only generate the same security key by using the helper data. When an integrated circuit is exposed or compromised by external hacking, a method of changing a security key through re-execution of the enrollment phase by the integrated circuit may be inefficient, because additional circuits or costs may be incurred to re-perform the wafer testing phase. Therefore, existing integrated circuits supporting a PUF are vulnerable to external hacking due to their structure in which only the same security key is repeatedly generated.

### SUMMARY

According to an aspect of the invention, there is provided an integrated circuit for supporting a physically unclonable function (PUF). According to another aspect of the invention, there is provided an operation method of an integrated circuit comprising a physically unclonable function (PUF) block. Preferred embodiments are defined by the dependent claims.

The present disclosure relates to integrated circuits including an integrated circuit that may in embodiments provide enhanced security by generating at least one of a plurality of final keys as a security key from physically unclonable function (PUF) data generated using the minimum PUF blocks, system-on-chips including a system-on-chip including the integrated circuit, and methods of operating them.

In general, according to some aspects, an integrated circuit supporting a physically unclonable function (PUF) includes a PUF block including a PUF cell array, and a controller configured to generate a security key based on PUF data generated using the PUF block, wherein the controller is configured to perform an error correction operation on the PUF data to generate an initial key, perform a length extension operation on the initial key to generate an intermediate key, and, from the intermediate key, generate at least one of a plurality of final keys as the security key.

In general, according to some aspects, an operation method of an integrated circuit, including a physically unclonable function (PUF) block for supporting a PUF, includes receiving a first request for a first security key from a first security device, generating a first final key from among a plurality of final keys in response to the first request, and transmitting the first final key as the first security key to the first security device, wherein the plurality of final keys are based on an intermediate key corresponding to a result of a length extension operation on an initial key, and the initial key matches a result of an error correction operation on PUF data generated by using the PUF block.

In general, according to some aspects, a system-on-chip includes a processor, a first security device configured to perform an encryption operation and a decryption operation on first input/output data of the processor, and an integrated circuit configured to provide a first security key to the first security device by using a physically unclonable function (PUF) block, wherein the integrated circuit is configured to generate an initial key by sequentially performing a bit decoding operation and a block decoding operation for error correction of PUF data generated through the PUF block, generate an intermediate key by sequentially performing a block encoding operation and a bit encoding operation on the initial key, and, from the intermediate key, generate a first final key from among a plurality of final keys as the first security key.

In general, according to some aspects, a system-on-chip includes a processor, a plurality of security devices, and an integrated circuit including a physically unclonable function (PUF) block, wherein the integrated circuit is configured to generate an initial key by performing an error correction operation on PUF data generated by using the PUF block, generate an intermediate key by performing a length extension operation on the initial key, generate a plurality of security keys from the intermediate key, and provide the plurality of security keys to the plurality of security devices.

Merely for assistance, it is note that "supporting" and "to support" may respectively mean "suitable for performing".

### BRIEF DESCRIPTION OF THE DRAWINGS

Implementations of the present disclosure will be more clearly understood from the following detailed description taken in conjunction with the accompanying drawings.
FIG. 1 is a block diagram schematically showing an example of an integrated circuit.
FIG. 2 is a flowchart of an example of an operation method of an integrated circuit.
FIG. 3 is a flowchart of an example of an operation method of an integrated circuit.
FIG. 4A is a block diagram illustrating an example operation of an integrated circuit in an enrollment phase, and FIG. 4B is a block diagram illustrating an example operation of the integrated circuit in a reconstruction phase.
FIG. 5A is a diagram illustrating an example of a scheme for a bit decoding operation of a bit decoder of FIG. 4B, and FIG. 5B is a diagram illustrating an example of a scheme for a block decoding operation of a block decoder of FIG. 4B.
FIG. 6A is a diagram illustrating an example of a block encoding operation scheme for a block encoder of FIG. 4B, and FIG. 6B is a diagram illustrating an example of a scheme for a bit encoding operation of a bit encoder of FIG. 4B.
FIG. 7 is a flowchart of an example of an operation method of an integrated circuit.
FIGS. 8A and 8B are diagrams illustrating an example of an operation method of a key management circuit.
FIG. 9 is a flowchart of an example of an operation method of an integrated circuit.
FIG. 10A is a block diagram showing an example of an integrated circuit, and FIG. 10B is a table diagram illustrating an example operation of the integrated circuit using a one-time programmable (OTP) memory of FIG. 10A.
FIG. 11 is a flowchart of an example of an operation method of an integrated circuit.
FIGS. 12A and 12B are block diagrams illustrating an example operation of a key management circuit.
FIG. 13 is a flowchart of an example of an operation method of an integrated circuit.
FIG. 14 is a block diagram illustrating an example operation of a key management circuit.
FIG. 15 is a flowchart of an example of an operation method of an integrated circuit.
FIG. 16 is a flowchart of an example of an operation method of an integrated circuit.
FIG. 17 is a diagram illustrating an example of an operation method of a key management circuit.
FIG. 18 is a flowchart of an example of an operation method of an integrated circuit.
FIG. 19 is a diagram illustrating an example of an operation method of key management circuit.
FIG. 20 is a block diagram schematically showing an example of an electronic device.

### DETAILED DESCRIPTION

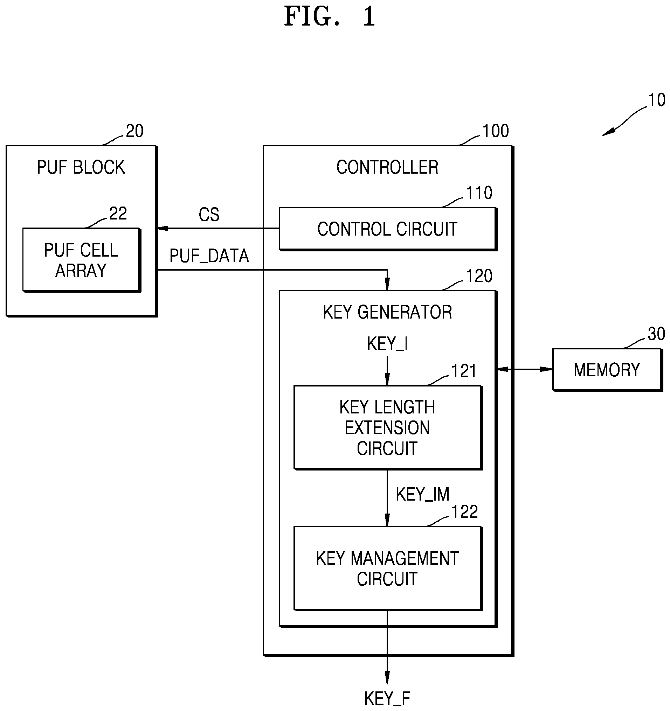

FIG. 1 is a block diagram schematically showing an example of an integrated circuit 10. The integrated circuit 10 is an integrated circuit for supporting a physically unclonable function (PUF) and may be variously referred to as a PUF integrated circuit, a PUF device, a PUF system, etc. In some implementations, the integrated circuit 10 may be manufactured through a semiconductor process, and components of the integrated circuit 10 may be packaged into a single package or may be individually packaged into two or more packages. Also, the integrated circuit 10 may be mounted on various types of chips (e.g., a system-on-chip) or electronic devices that encrypt and decrypt data or perform security authentication. The integrated circuit 10 may generate a security key in response to a security key request from a security device, such as a security circuit or a host (e.g., a processor) and provide the security key to the security device. As an example, the security circuit may be a crypto circuit or an authentication circuit.

Referring to FIG. 1, the integrated circuit 10 includes a PUF block 20, may include a memory 30, and includes a controller 100.

The PUF block 20 includes a PUF cell array 22 including a plurality of PUF cells. PUF cells of the PUF cell array 22 may generate a unique signal having a unique value according to the PUF. The PUF may refer to providing a unique value corresponding to hardware based on the intrinsic characteristics of the hardware. For example, even when a plurality of hardware components, such as semiconductor chips, are manufactured through the same process, the plurality of hardware components may not be completely identical to one another physically, and slight variations may occur between the plurality of hardware components. Based on such variations, unique values of hardware may be extracted, and extracted values may be used in applications that require security, e.g., secure communication, secure data processing, user identification, firmware update, etc. In some implementations, PUF cells of the PUF cell array 22 may have an arbitrary structure that generates k (k is an integer greater than or equal to 2) bit data having a unique value. For example, the PUF cells may be implemented in at least one from among a PUF structure based on a transistor threshold voltage, a static random access memory (SRAM)-type PUF structure based on values stored in SRAM cells, an XOR-based PUF structure with intermediate PUF cells arranged in parallel, a lightweight PUF structure, a ring oscillator-based PUF structure based on frequency variation, a memory-based PUF structure (e.g., an SRAM-based PUF structure), a latch-based PUF structure, a leakage-based PUF structure based on a leakage current, an arbiter-based PUF structure in which a signal path is arbitrarily determined, and/or a reconfigurable PUF structure that may be reconfigured by a laser beam or a thermal change.

The memory 30 may be a non-volatile memory. For example, the memory 30 may include a flash memory, a magnetic random access memory (MRAM), a phase-change RAM (PRAM), a ferroelectric RAM (FeRAM), etc.

In some implementations, the controller 100 may include a control circuit 110 and a key generator 120. Meanwhile, the operation of the control circuit 110 and the key generator 120 included in the controller 100 may also be referred to as the operation of the integrated circuit 10 or the controller 100, and the controller 100 may be implemented in hardware or to include arbitrary processing units that execute a series of instructions (or software). For example, the controller 100 may be implemented based on a field programmable gate array (FPGA) or an application specific integrated circuit (ASIC). In some implementations, the key generator 120 may be integrated with control circuit 110.

In some implementations, in response to a security key request received from an external security device, the control circuit 110 may provide a control signal CS to the PUF block 20 to read PUF data PUF_DATA needed to generate a security key. The control signal CS may include signals needed to output the PUF data PUF_DATA from valid PUF cells from among the plurality of PUF cells of the PUF cell array 22. The control circuit 110 may generate the control signal CS based on a validity map generated in the enrollment phase of the integrated circuit 10. The validity map may indicate valid PUF cells that have been verified to repeatedly output the same value from among the plurality of PUF cells of the PUF cell array 22. In some implementations, the PUF data PUF_DATA includes PUF data output from all PUF cells, and the key generator 120 may extract only PUF data output from valid PUF cells from the PUF data PUF_DATA based on the validity map and use extracted PUF data to generate a security key.

In some implementations, the key generator 120 may include a key length extension circuit 121 and a key management circuit 122. First, the key generator 120 generates an initial key KEY_I by performing an error correction operation on the PUF data PUF_DATA. In detail, for example, the key generator 120 may perform an error correction operation on the PUF data PUF_DATA based on a certain error correction-related decoding scheme and helper data generated in the enrollment phase. Meanwhile, in some implementations, as a result of the error correction operation, the number of bits of the initial key KEY_I may be smaller than the number of bits of the PUF data PUF_DATA. (It is noted that the term 'certain' within this disclosure generally means 'pre-determined').

In some implementations, the key length extension circuit 121 generates an intermediate key KEY_IM by performing a length extension operation on the initial key KEY_I. As a specific example, the key generator 120 may perform a length extension operation on the initial key KEY_I based on a certain length extension scheme and helper data generated in the enrollment phase. In some implementations, the certain length extension scheme may be a scheme associated with the certain error correction decoding scheme used by the key generator 120. For example, helper data may be stored in the memory 30, and the key generator 120 may read the helper data from the memory 30 and perform an error correction operation on the PUF data PUF_DATA and a length extension operation on the initial key KEY_I. Meanwhile, since the key length extension circuit 121 generates the intermediate key KEY_IM using an error-corrected initial key KEY_I, and the intermediate key KEY_IM may or does not include an error, the intermediate key KEY_IM may be suitable for generating a security key with guaranteed reliability. In some implementations, the number of bits of the intermediate key KEY_IM may be identical or similar to the number of bits of the PUF data PUF_DATA. In detail, for example, the PUF data PUF_DATA may include 2550 bits, the initial key KEY_I may include 256 bits, and the intermediate key KEY_IM may include 2550 bits.

In some implementations, the key management circuit 122 generates any one final key KEY_F from among a plurality of final keys as a security key from the intermediate key KEY_IM. In detail, for example, the key management circuit 122 may randomly select any one of the plurality of final keys that may be generated from the intermediate key KEY_IM and generate a selected final key KEY_F as a security key. In some implementations, the key management circuit 122 may select a final key KEY_F appropriate for the security device that has requested a security key from among the plurality of final keys that may be generated from the intermediate key KEY_IM and generate a selected final key KEY_F as the security key. In some implementations, the key management circuit 122 may determine a security level or security characteristics based on information regarding an application being executed on the security device and set a method of generating the final key KEY_F or a length of the final key KEY_F in advance before generation of the final key KEY_F. In this specification, information regarding an application may also be referred to as application information.

The final key KEY_F generated by the key management circuit 122 may be provided to the security device in response to repeated security key requests of the security device. At this time, the final key KEY_F may be defined as being in use by the security device. In some implementations, the key management circuit 122 may discard the final key KEY_F when the final key KEY_F satisfies a certain invalidity condition. At this time, the final key KEY_F may be defined as discarded. In some implementations, the certain invalidity condition may be set based on situations in which the security of the final key KEY_F in use is or may be deteriorated. In detail, for example, the certain invalidity condition may include a condition in which it is detected that the final key KEY_F has been exposed to the outside, a condition in which the number of outputs of the final key KEY_F from the controller 100 has reached a threshold number, or a condition in which a threshold time has been elapsed from a time point of the initial output of the final key KEY_F from the controller 100. However, this is merely an example implementation, and, without being limited thereto, more various conditions may be set as invalidity conditions. In some implementations, the key management circuit 122 may generate another final key instead of a discarded final key KEY_F and provide a new final key to the security device.

In some implementations, the key management circuit 122 may manage a plurality of final keys that may be generated from the intermediate key KEY_IM in one of an in-use state, a discarded state, and an undisclosed state (or a standby state). In some implementations, the key management circuit 122 may manage a plurality of final keys by using a one-time programmable (OTP) memory. The key management circuit 122 may adaptively provide a security key with high security to the security device by utilizing a plurality of final keys that may be generated from the intermediate key KEY_IM through the above-stated management method. Generally within this disclosure, the term 'in-use state' means 'a state of currently being used', the term 'discarded state' means 'a state of not currently being used' and the term 'undisclosed state' means a state that is neither an 'in-use state' nor a 'discarded state', e.g., is a 'standby state'. Similarly, the term 'discard(ing)' generally means to cease using, at least temporarily.

In some implementations, when security key requests are received from a plurality of security devices, the key management circuit 122 may generate final keys KEY_F corresponding to the number of security key requests received among the plurality of security devices and provide the final keys KEY_F to the plurality of security devices, in response to the security key requests. In some implementations, the key management circuit 122 may generate and provide final keys KEY_F suitable for a plurality of security devices based on information regarding applications being executed on the plurality of security devices, respectively.

The integrated circuit 10 may generate the intermediate key KEY_IM based on the PUF data PUF_DATA and helper data stored in one enrollment phase and, by utilizing the intermediate key KEY_IM, provide any one of a plurality of final keys to a security device or provide security keys to all of a plurality of security devices. Therefore, the integrated circuit 10 may strengthen the security of a chip or an electronic device by flexibly generating various security keys for the structures of various chips or electronic devices on which the integrated circuit 10 is mounted.

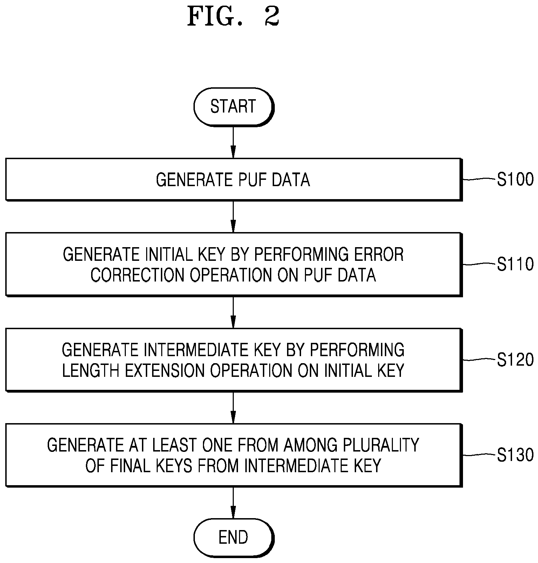

FIG. 2 is a flowchart of an example of a method of operating an integrated circuit.

Referring to FIG. 2, in operation S100, an integrated circuit generates PUF data by using a PUF block. In some implementations, the PUF data may include data output from valid PUF cells of the PUF block. A valid PUF cell may be a PUF cell that has been verified, preferably within or by the integrated circuit, to repeatedly output the same value.

In operation S110, the integrated circuit performs an error correction operation on the PUF data to generate an initial key. In some implementations, the integrated circuit may perform an error correction operation on the PUF data step-by-step. In detail, for example, the integrated circuit may generate an initial key by sequentially performing a bit decoding operation and a block decoding operation for error correction on the PUF data.

In operation S120, the integrated circuit performs a length extension operation on the initial key to generate an intermediate key. In some implementations, the integrated circuit may perform a length extension operation on the initial key step-by-step. In detail, for example, the integrated circuit may generate an intermediate key by sequentially performing a block encoding operation and a bit encoding operation on the initial key. In some implementations, the scheme for the bit decoding operation of operation S110 may be associated with the scheme for the bit encoding operation of operation S120, and the scheme for the block decoding operation of operation S110 may be associated with the scheme for the block encoding operation of operation S120. In this specification, a scheme for a decoding operation may also be referred to as a decoding scheme.

At operation S130, the integrated circuit generates at least one of a plurality of final keys from the intermediate key. In some implementations, when a security key request is received from a security device, the integrated circuit may generate one of a plurality of final keys and provide a generated security key to the security device. In some implementations, when security key requests are received from a plurality of security devices, the integrated circuit may provide a number of final keys corresponding to the number of received security key requests from among the plurality of final keys as security keys to the plurality of security devices.

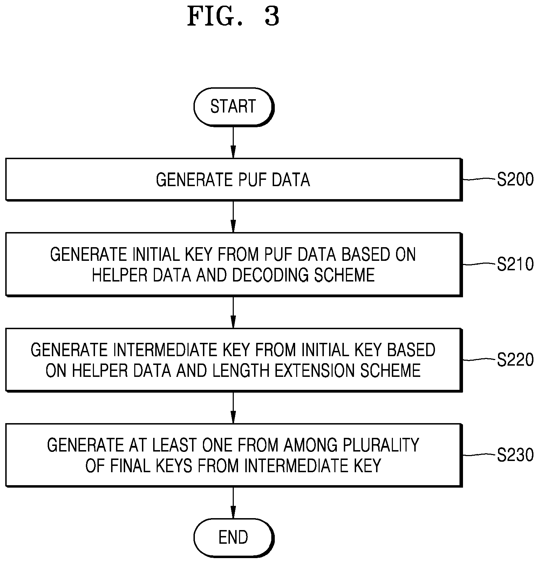

FIG. 3 is a flowchart of an example of a method of operating an integrated circuit.

Referring to FIG. 3, in operation S200, an integrated circuit may generate PUF data by using a PUF block.

In operation S210, the integrated circuit may generate an initial key from the PUF data based on helper data and a decoding scheme. In some implementations, helper data is data generated for error correction of PUF data in the enrollment phase of the integrated circuit and stored in a memory of the integrated circuit and may be used in an error correction operation for the PUF data. In some implementations, a decoding scheme may be the basis of an error correction operation on the PUF data.

In operation S220, the integrated circuit may generate an intermediate key from an initial key based on the helper data and a length extension scheme. In some implementations, the integrated circuit may use the helper data, which is used in operation S210, also in operation S220. In some implementations, the length extension scheme may be associated with the decoding scheme of operation S210.

In operation S230, the integrated circuit may generate at least one of a plurality of final keys from the intermediate key.

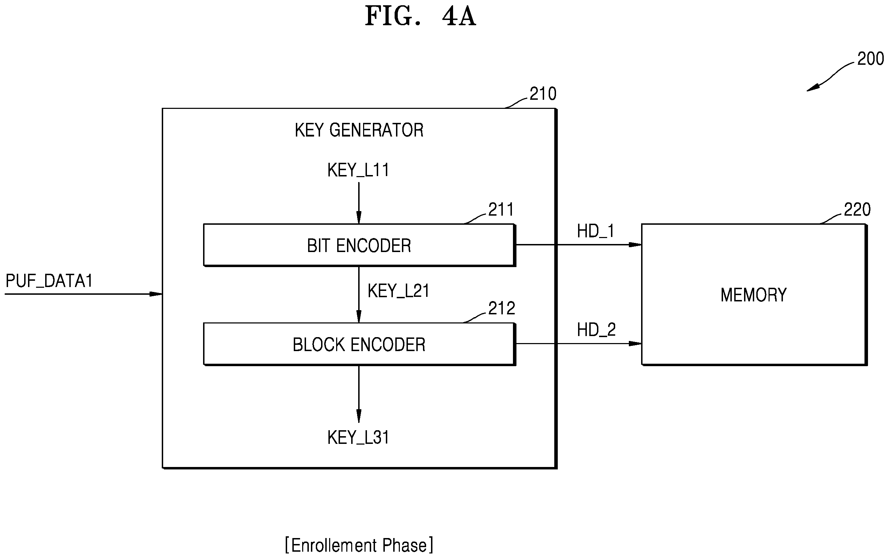

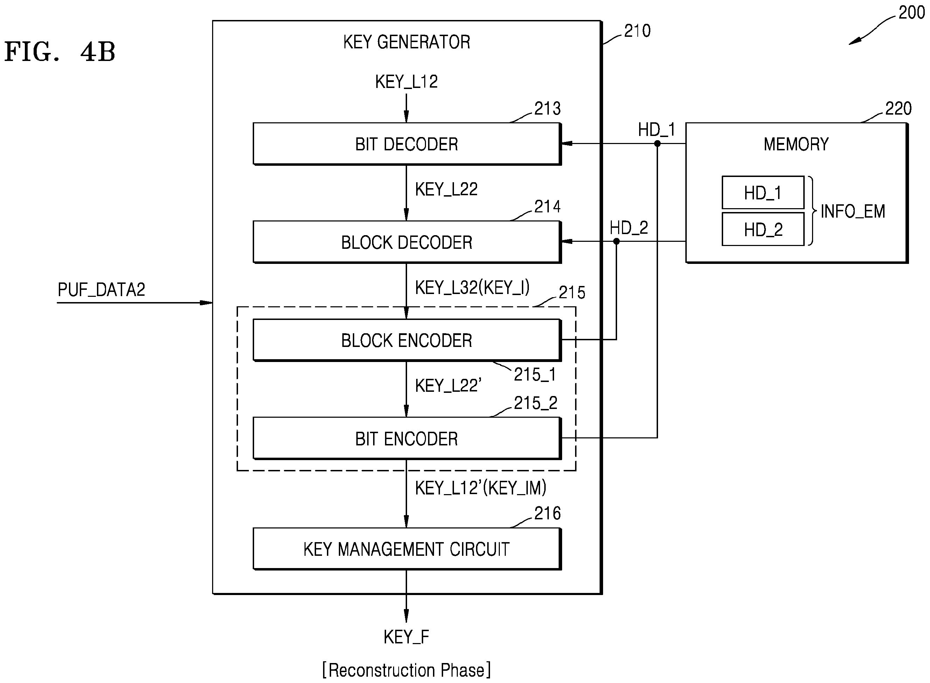

FIG. 4A is a block diagram illustrating an example operation of an integrated circuit 200 in an enrollment phase, and FIG. 4B is a block diagram illustrating an example operation of the integrated circuit 200 in a reconstruction phase. The integrated circuit 200 includes a key generator 210 and a memory 220, and FIGS. 4A and 4B show the configuration of the key generator 210 operating at each stage.

Referring to FIG. 4A, the integrated circuit 200 may include the key generator 210 and the memory 220.

In some implementations, the key generator 210 may include a bit encoder 211 and a block encoder 212. In the enrollment phase, the key generator 210 may receive first PUF data PUF_DATA1 from a PUF block. The enrollment phase may be defined as a phase for determining valid PUF cells by analyzing output data of a plurality of PUF cells of a PUF block and generating and storing helper data for error correction of the first PUF data PUF_DATA1 output from the PUF block. In FIG. 4A, the helper data may include first helper data HD_1 and second helper data HD_2.

In some implementations, the bit encoder 211 may generate the first helper data HD_1 by performing a bit encoding operation on a 1st-1 layer key KEY_L11 generated from the first PUF data PUF_DATA1 and output a 2nd-1 layer key KEY_L21. Also, the bit encoder 211 may store the first helper data HD_1 in the memory 220.

In some implementations, the block encoder 212 may performs a block encoding operation on the 2nd-1 layer key KEY L21 to generate second helper data HD_2 and output a 3rd-1 layer key KEY_L31. Also, the block encoder 212 may store the second helper data HD_2 in the memory 220.

In some implementations, the key generator 210 may further include a valid data checker, and the valid data checker may generate a validity map by determining valid PUF cells from among a plurality of PUF cells of a PUF block. The valid data checker may store the validity map in the memory 220.

Further referring to FIG. 4B, the key generator 210 may include a bit decoder 213, a block decoder 214, a key length extension circuit 215, and a key management circuit 216. The key length extension circuit 215 may include a block encoder 215_1 and a bit encoder 215_2. In some implementations, the key length extension circuit 215 may include the bit encoder 211 and the block encoder 212 that operate in the enrollment phase. In detail, the block encoder 215_1 may correspond to the block encoder 212 of FIG. 4A, and the bit encoder 215_2 may correspond to the bit encoder 211 of FIG. 4A.

In the reconstruction phase, the key generator 210 may receive second PUF data PUF_DATA2 from the PUF block in response to a security key request from a security device. The reconstruction step may be defined as a phase in which the integrated circuit 200 generates a security key in response to a security key request from at least one security device. In other words, the reconstruction phase may be a phase in which the integrated circuit 200 is mounted on an electronic device and operates to generate a security key.

In some implementations, the memory 220 may store enrollment information INFO_EM including the first helper data HD_1 and the second helper data HD_2. The key generator 210 may perform an operation to generate a security key by reading the enrollment information INFO_EM from the memory 220 in the reconstruction phase.

In some implementations, the bit decoder 213 may perform a bit decoding operation on the 1st-2 layer key KEY_L12 generated from the second PUF data PUF_DATA2 based on the first helper data HD_1 and output a 2nd-2 Layer key KEY_L22. In some implementations, the bit decoding operation may be an operation to correct an error of the 1st-2 layer key KEY_L12 bit-by-bit.

In some implementations, the block decoder 214 may perform a block decoding operation on the 2nd-2 layer key KEY_L22 based on the second helper data HD_2 and output a 3rd-2 layer key KEY_L32. In some implementations, the block decoding operation may be an operation to correct an error of the 2nd-2 layer key KEY_L22 block-by-block. The 3rd-2 layer key KEY_L32 may correspond to the initial key KEY_I described above.

In some implementations, the block encoder 215_1 may perform a block encoding operation for the 3rd-2 layer key KEY_L32 based on the second helper data HD_2 and generate a 2nd-2' layer key KEY_L22'. In some implementations, the number of bits of the 2nd-2' layer key KEY_L22' may match the number of bits of the 2nd-2 layer key KEY_L22. In some implementations, a scheme for a block encoding operation and a scheme for a block decoding operation may be associated with each other.

In some implementations, the bit encoder 215_2 may performs a bit encoding operation for the 2nd-2' layer key KEY_L22' based on the first helper data HD_1 and output a 1st-2' layer key KEY_L12'. In some implementations, the number of bits of the 1st-2' layer key KEY_L12' may match the number of bits of the 1st-2 layer key KEY_L12. The 1st-2' layer key KEY_L12' may correspond to the intermediate key KEY_IM described above. In some implementations, a scheme for a bit encoding operation and a scheme for a bit decoding operation may be associated with each other.

In some implementations, the key management circuit 216 may output any one final key KEY_F from among a plurality of final keys as a security key from the 1st-2' layer key KEY_L12'. The final key KEY_F may be provided to a security device as a response to a security key request from the security device.

In the same manner as described above, whenever a security key request is received from a security device, the key generator 210 may generate the second PUF data PUF_DATA2 of a PUF block in response to the security key request and generate the final key KEY_F based on the generated second PUF data PUF_DATA2.

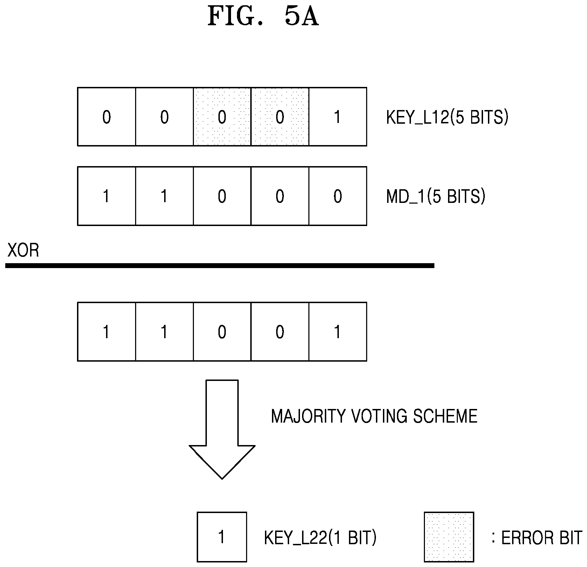

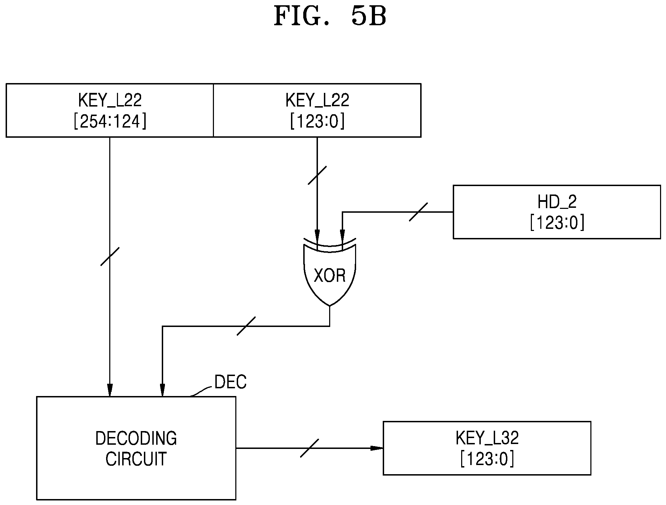

FIG. 5A is a diagram illustrating an example of a scheme for a bit decoding operation of the bit decoder 213 of FIG. 4B, and FIG. 5B is a diagram illustrating an example of a scheme for a block decoding operation of the block decoder 214 of FIG. 4B. Although FIG. 5A shows an implementation of performing a bit decoding operation in units of 5 bits of the 1st-2 layer key KEY_L12, it is merely an example implementation to aid understanding, and a bit decoding operations may be performed in various units of bits without being limited thereto. Also, although FIG. 5B shows an implementation in which the 2nd-2 layer key KEY_L22 includes 255 bits, it is also merely an example implementation to aid understanding, and a block decoding operation may be performed on the 2nd-2 Layer key KEY_L22 including less or more than 255 bits.

Referring to FIG. 5A, the bit decoder 213 may perform a masking operation based on XOR operation for masking '00001', which is a part of the 1st-2 layer key KEY_L12 and includes two error bits, into '1 1000', which is first mask data MD_1. The bit decoder 213 may generate '1', which is the 2nd-2 layer key KEY_L22, by applying a majority voting scheme to '11001', which is a result of the masking operation. In some implementations, the first mask data MD_1 is generated from the first helper data HD_1 and may be data for masking the 1st-2 layer key KEY_L12 to make all bits '1' (or '0'). In detail, for example, the most significant bit (e.g., '1') of the first mask data MD_1 may be the even parity bit of the first helper data HD_1, and the remaining bits of the first mask data MD_1 (e.g., '1000') may correspond to the first helper data HD_1 stored in the memory 220 of FIG. 4B.

The implementation shown in FIG. 5A is merely an example implementation, the present disclosure is not limited thereto, and the bit decoder 213 may perform a bit decoding operation based on more various schemes.

Referring to FIG. 5B, the block decoder 214 may divide the 2nd-2 layer key KEY_L22 into more significant bits including 131 bits and less significant bits including 124 bits, and an XOR operation may be performed on the less significant bits and the second helper data HD_2 including 124 bits. The block decoder 214 may generate the 3rd-2 layer key KEY_L32 including 124 bits by performing a block decoding operation based on a result of the XOR operation and the more significant bits through a decoding circuit DEC. In some implementations, the decoding circuit (DEC) may perform a block decoding operation based on a block code-based error correction decoding scheme. In detail, for example, the decoding circuit DEC may correspond to a bose-chaudhuri-hocquenghem (BCH) decoding circuit, and the length of more significant bits input to the decoding circuit DEC may correspond to the length of a BCH code.

The key generator 210 may performs a bit decoding operation and a block decoding operation in the manner described above with reference to FIGS. 5A and 5B to correct errors in the 1st-2 layer key KEY_L12 and generate the 3rd-2 layer key KEY_L32 without an error as the initial key KEY_I.

Meanwhile, the decoding schemes of FIGS. 5A and 5B are merely example implementations, and the key generator 210 may generate the initial key KEY_I based on various decoding schemes without being limited thereto.

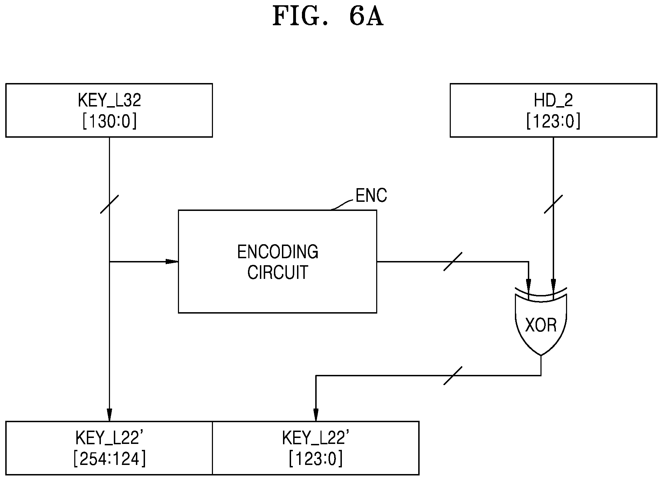

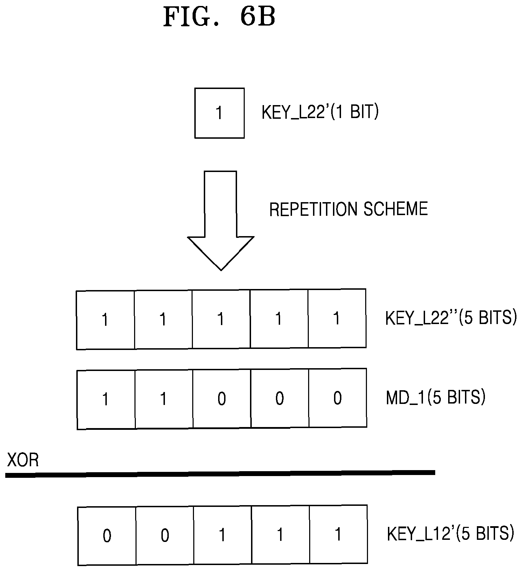

FIG. 6A is a diagram illustrating an example of a block encoding operation scheme for the block encoder 215_1 of FIG. 4B, and FIG. 6B is a diagram illustrating an example of a scheme for a bit encoding operation of the bit encoder 215_2 of FIG. 4B. It is assumed that the scheme for a block encoding operation to be described below with reference to FIG. 6A is associated with the block decoding operation described above with reference to FIG. 5B, and the scheme for a bit encoding operation to be described below with reference to FIG. 6B is associated with the bit decoding operation described above with reference to FIG. 5A. However, the implementations shown in FIGS. 6A and 6B are merely example implementations, and the present disclosure is not limited thereto. The encoding schemes of FIGS. 6A and 6B may vary according to the decoding schemes of FIGS. 5A and 5B.

Referring to FIG. 6A, the block encoder 215_1 may perform a block encoding operation based on the 3rd-2 layer key KEY_L32, which includes 131 bits and is the initial key KEY_I, through an encoding circuit ENC and perform an XOR operation on a performance result including 124 bits and the second helper data HD_2 including 124 bits. The block encoder 215_1 may generate the 2nd-2' layer key KEY_L22' by combining the 3rd-2 layer key KEY_L32 and a result of the XOR operation. For example, more significant bits of the 2nd-2' layer key KEY_L22' may correspond to the 3rd-2 layer key KEY_L32, and less significant bits of the 2nd-2' layer key KEY_L22' may correspond to the result of the XOR operation.

Further referring to FIG. 6B, the bit encoder 215_2 may generate a 2nd-2 layer key KEY_L22" including 5 bits (i.e., '11111') by applying a repetitive scheme to '1', which corresponds to a part of the 2nd-2' layer key KEY_L22'. Thereafter, the bit encoder 215_2 may perform a masking operation based on the XOR operation on '11111' with '11000', which is the first mask data MD_1. '00111', which is a result of the masking operation, may correspond to a part of the 1st-2' layer key KEY_L12', which is the intermediate key KEY_IM. Meanwhile, '00111' of the 1st-2' layer key KEY_L12' may be a key generated by correcting errors from '00001' including error bits of the 1st-2 layer key KEY_L12 of FIG. 5A. In this regard, the 1st-2' layer key KEY_L12', which is the intermediate key KEY_IM, does not include errors and may enable generation of a highly reliable security key.

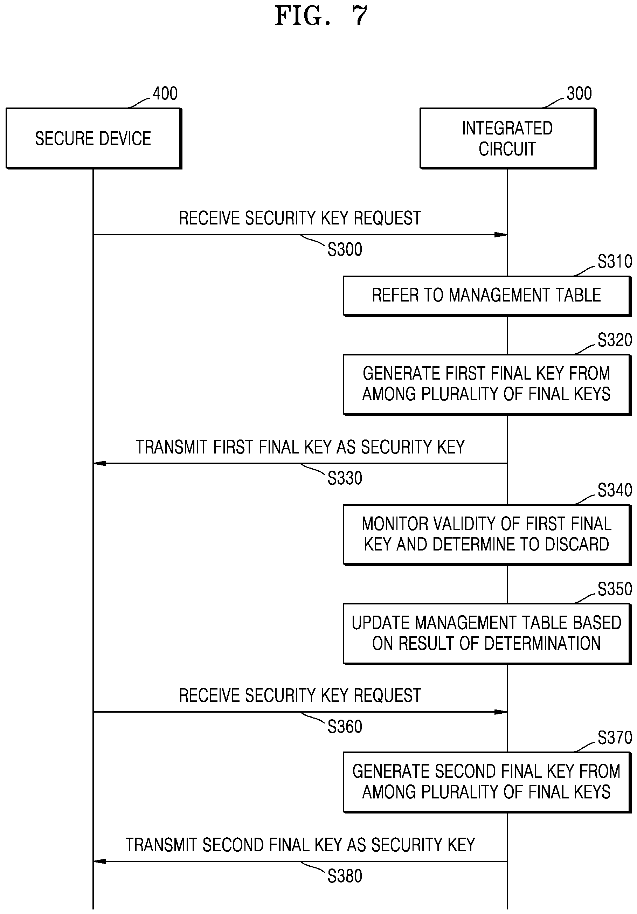

FIG. 7 is a flowchart of an example of a method of operating an integrated circuit.

Referring to FIG. 7, in operation S300, an integrated circuit 300 may receive a security key request from a security device 40. In some implementations, security device 40 may be a security circuit or a processor. In this specification, a security circuit may correspond to a crypto engine, and the crypto engine may be implemented in hardware, software, or a combination of hardware and software.

In operation S310, the integrated circuit 300 may initiate generation of a security key to be provided to the security device 40 by referring to a management table in response to a request. In some implementations, the management table may include information for managing a plurality of final keys that may be provided as security keys in any one of an in-use state, a discarded state, and an undisclosed state. Also, in some implementations, information included in the management table may be used when generating a first final key in an in-use state.

In operation S320, the integrated circuit 300 may generate a first final key from among a plurality of final keys. In some implementations, the integrated circuit 300 may sequentially generate an initial key and an intermediate key from PUF data generated by using a PUF block and generate a first final key from among final keys that may be generated from the intermediate key by referring to the management table of operation S310.

In operation S330, the integrated circuit 300 may transmit the first final key as a security key to the security device 40.

In operation S340, the integrated circuit 300 may monitor the validity of the first final key currently in use by the security device 40 and determine whether to discard the first final key. In some implementations, the integrated circuit 300 may periodically or aperiodically monitor whether the first final key satisfies a certain invalidity condition. The integrated circuit 300 may determine to discard the first final key when the first final key satisfies the certain invalidity condition. In some implementations, the integrated circuit 300 may determine whether to discard the first final key randomly, regardless of the certain invalidity condition. In detail, the integrated circuit 300 may generate a random number associated with discarding and determine to discard the first final key when the random number has a particular value.

In operation S350, the integrated circuit 300 may update the management table based on a result of the determination of operation S340. In some implementations, the integrated circuit 300 may update the management table to prevent the first final key from being generated, such that the first final key in a discarded state is not used as a security key in the future. Also, in some implementations, the integrated circuit 300 may update the management table, such that a second final key to be provided to the security device 40 instead of the first final key from among a plurality of final keys is switched from an undisclosed state to an in-use state.

In operation S360, an integrated circuit 300 may receive a security key request from a security device 40.

In operation S370, the integrated circuit 300 may generate a second final key from among a plurality of final keys. In some implementations, the integrated circuit 300 may sequentially generate an initial key and an intermediate key from PUF data generated by using a PUF block and generate a second final key from among final keys that may be generated from the intermediate key by referring to the updated management table of operation S350.

In operation S380, the integrated circuit 300 may transmit the second final key as a security key to the security device 40.

In this regard, the integrated circuit 300 may selectively provide any one of a plurality of final keys to the security device 40 by using helper data generated in one enrollment phase, thereby strengthening the security performance of the security device 40. Also, the integrated circuit 300 may change a security key provided to the security device 40 without separate logic through a management table, thereby further strengthening the security of the security device 40 at a low cost.

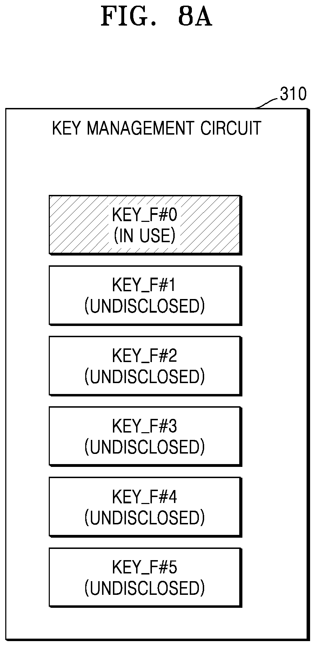

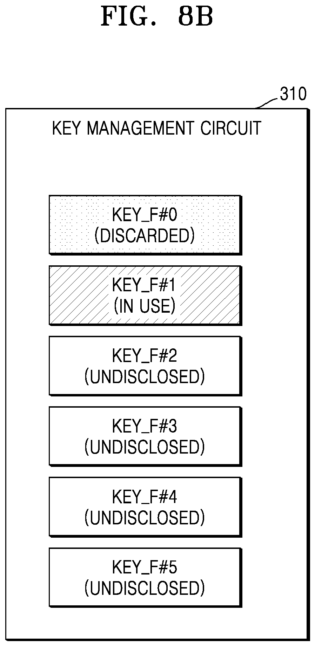

FIGS. 8A and 8B are diagrams illustrating an example of a method of operating a key management circuit 310. In FIGS. 8A and 8B, it is assumed that six final keys, that is, first to sixth final keys KEY_F#0 to KEY_F#5 may be generated from an intermediate key. However, it is for convenience of explanation, and the present disclosure is not limited thereto.

Referring to FIG. 8A, the key management circuit 310 may manage first to sixth final keys KEY_F#0 to KEY_F#5 that may be generated from an intermediate key. The key management circuit 310 may manage a first final key KEY_F#0 in an in-use state and, when a security key request is received from a security device, generate the first final key KEY_F#0 from an intermediate key and provide the first final key KEY_F#0 to the security device, in response to the security key request.

In some implementations, the key management circuit 310 may manage second to sixth final keys KEY_F#1 to KEY_F#5 in an undisclosed state, such that the second to sixth final keys KEY_F#1 to KEY_F#5 may be provided at any time in response to a second key request of the security device or other security devices.

Also, in some implementations, the key management circuit 310 may index and manage the second to sixth final keys KEY_F#1 to KEY_F#5 in the order to be used in the future.

Further referring to FIG. 8B, the key management circuit 310 may discard the first final key KEY_F#0. In some implementations, the key management circuit 310 may discard the first final key KEY_F#0 when the number of times that the first final key KEY_F#0 is output to the security device reaches a threshold number. In some implementations, the key management circuit 310 may discard the first final key KEY_F#0 when a threshold time has elapsed from a time point at which the first final key KEY_F#0 was first output to the security device. In some implementations, the key management circuit 310 may discard the first final key KEY_F#0 when it is detected that the first final key KEY_F#0 is exposed to the outside or a signal indicating that the first final key KEY_F#0 is exposed is received from the security device. In some implementations, the key management circuit 310 may randomly discard the first final key KEY_F#0.

The key management circuit 310 may manage the state of the first final key KEY_F#0 to be switched to a discarded state. The key management circuit 310 may manage the state of a second final key KEY_F#1 to be switched to an in-use state, and, when a security key request is received from the security device, the key management circuit 310 may generate the second final key KEY_F#1 from the intermediate key and provide the second final key KEY_F#1 to the security device, in response to the second key request.

In some implementations, the key management circuit 310 may manage the first to sixth final keys KEY_F#0 to KEY_F#5 based on a management table, and the management table may be stored in a memory included in an integrated circuit or an OTP memory.

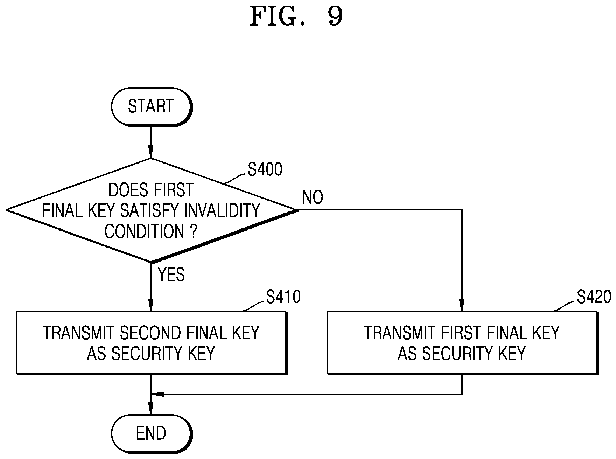

FIG. 9 is a flowchart of an example of a method of operating an integrated circuit.

Referring to FIG. 9, in operation S400, an integrated circuit may determine whether a first final key satisfies an invalidity condition. In some implementations, the first final key is in an in-use state and may be provided as a security key to a security device in response to a security key request from the security device.

When a result of the determination in operation S400 is 'YES', the method proceeds to operation S410, wherein, when a security key request is received from the security device, the integrated circuit may transmit a second final key from among a plurality of final keys as a security key to the security device. Also, in operation S410, the integrated circuit may discard the first final key. It may be determined in advance that the second final key is to be used instead of the first final key when the first final key is discarded.

When a result of the determination in operation S400 is 'NO', the method proceeds to operation S420, wherein, when a security key request is received from the security device, the integrated circuit may transmit the first final key as a security key to the security device.

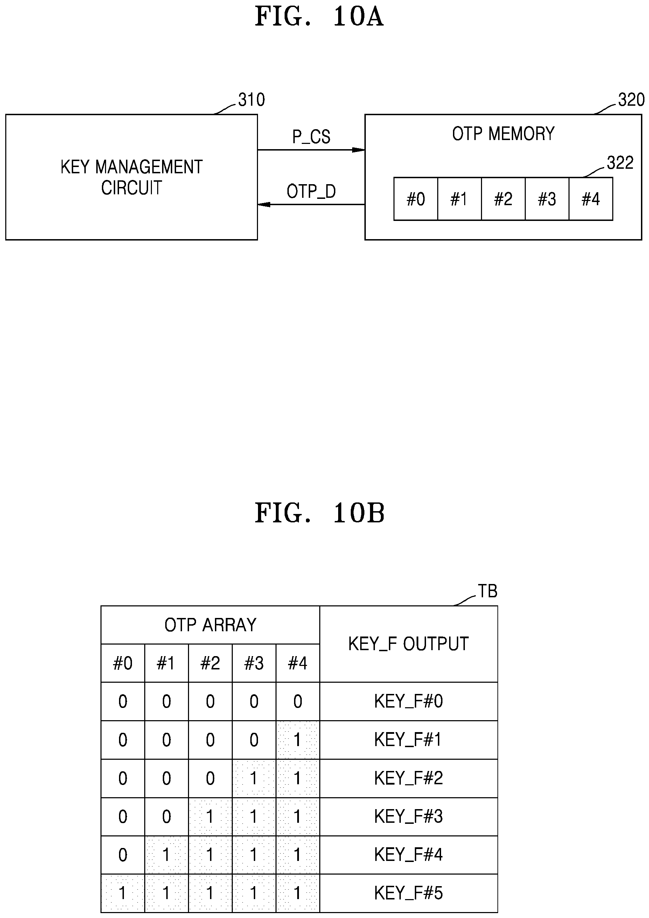

FIG. 10A is a block diagram showing an example of the integrated circuit 300, and FIG. 10B is a table diagram illustrating an example operation of the integrated circuit 300 using an OTP memory 320 of FIG. 10A. FIGS. 10A and 10B are described under the assumption that the first to sixth final keys KEY_F#0 to KEY_F#5 may be generated as in FIGS. 8A and 8B. However, it is merely an example implementation to aid understanding, and the present disclosure is not limited thereto.

Referring to FIG. 10A, the integrated circuit 300 may include the key management circuit 310 and the OTP memory 320. In some implementations, the OTP memory 320 may be implemented to be embedded in the key management circuit 310.

In some implementations, the OTP memory 320 may include an OTP array 322 in which OTP data OTP_D indicating a final key in an in-use state is stored. The OTP array 322 may store first to fifth bits #0 to #4, and the OTP data OTP_D may include the first to fifth bits #0 to #4.

In some implementations, the key management circuit 310 may provide a program control signal P_CS to the OTP memory 320 to discard a final key currently being used and generate another final key as a security key.

In some implementations, the OTP memory 320 may perform a program operation based on the program control signal P_CS, such that the value of at least one of the first to fifth bits #0 to #4 of the OTP array 322 is changed.

Referring to a management table TB of FIG. 10B, when the value of the first to fifth bits #0 to #4 is '00000', the key management circuit 310 may output the first final key KEY_F#0 as a security key. When the value of the first to fifth bits #0 to #4 is '00001', the key management circuit 310 may output the second final key KEY_F#1 as a security key, and the first final key KEY_F#0 may be discarded due to the characteristics of the OTP memory 320. When the value of the first to fifth bits #0 to #4 is '00011', the key management circuit 310 may output a third final key KEY_F#2 as a security key, and the second final key KEY_F#1 may be discarded due to the characteristics of the OTP memory 320. When the value of the first to fifth bits #0 to #4 is '00111', the key management circuit 310 may output a fourth final key KEY_F#3 as a security key, and the third final key KEY_F#2 may be discarded due to the characteristics of the OTP memory 320. When the value of the first to fifth bits #0 to #4 is '01111', the key management circuit 310 may output a fifth final key KEY_F#4 as a security key, and the fourth final key KEY_F#3 may be discarded due to the characteristics of the OTP memory 320. Also, when the value of the first to fifth bits #0 to #4 is '11111', the key management circuit 310 may output a sixth final key KEY_F#5 as a security key, and the fifth final key KEY_F#4 may be discarded due to the characteristics of the OTP memory 320.

In some implementations, the key management circuit 310 may generate the program control signal P_CS to sequentially program one bit at a time to manage the first to sixth final keys KEY_F#0 to KEY_F#5, based on the management table TB.

In some implementations, the key management circuit 310 may generate a signal for generating a final key indicated by the OTP data OTP_D based on the OTP data OTP_D received from the OTP memory 320. The key management circuit 310 may generate the final key indicated by the OTP data OTP_D based on a generated signal.

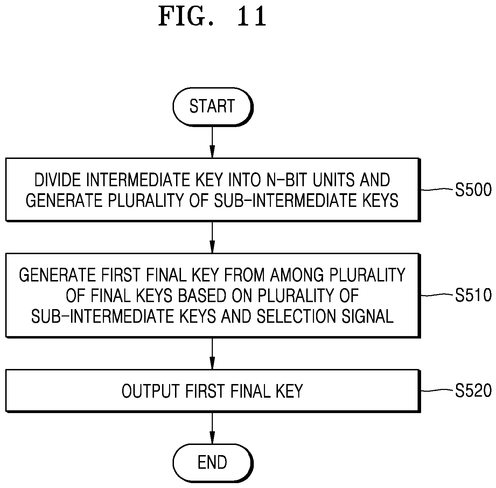

FIG. 11 is a flowchart of an example of a method of operating an integrated circuit. FIG. 11 illustrates a specific method in which an integrated circuit generates and outputs a first final key currently being used by a security device from an intermediate key.

Referring to FIG. 11, in operation S500, an integrated circuit generates a plurality of sub-intermediate keys by dividing an intermediate key into N (here, N is an integer greater than or equal to 2)-bit units in response to a security key request from a security device. (Terms of the format x-bit within this disclosure, e.g., M-bit or N-bit, generally means a number of individual bit(s) wherein the number is x).

In operation S510, the integrated circuit may generate a first final key from among a plurality of final keys that may be generated from the intermediate key based on a plurality of sub-intermediate keys and a selection signal. In some implementations, the selection signal may be a signal for selecting M (here, M is an integer less than or equal to N)-bits in each of the plurality of sub-intermediate keys. In some implementations, the integrated circuit may generate a first final key by combining results of XOR operations between M-bits selected from each of the plurality of sub-intermediate keys.

In operation S520, the integrated circuit may output the first final key generated in operation S510 to the security device.

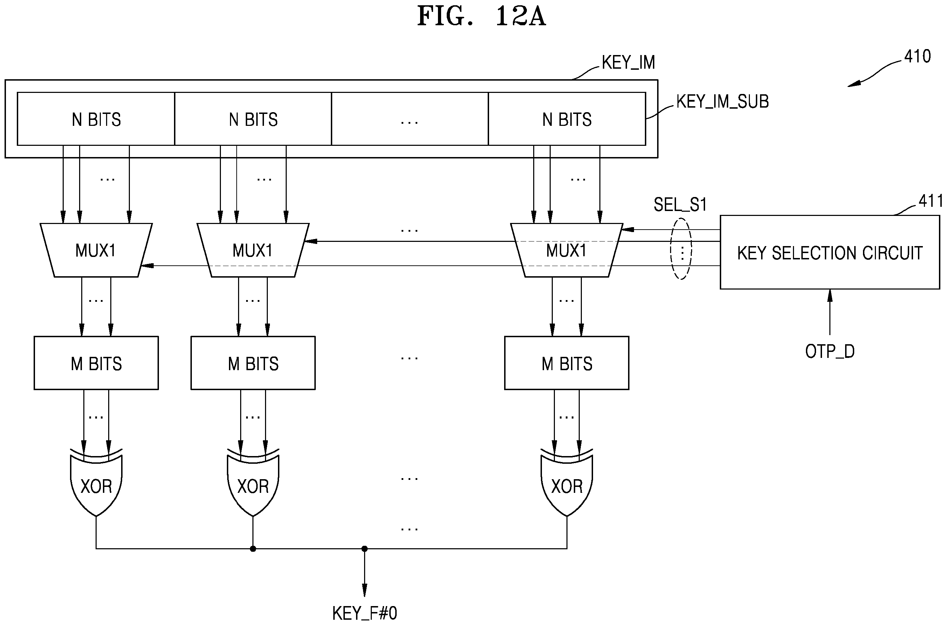

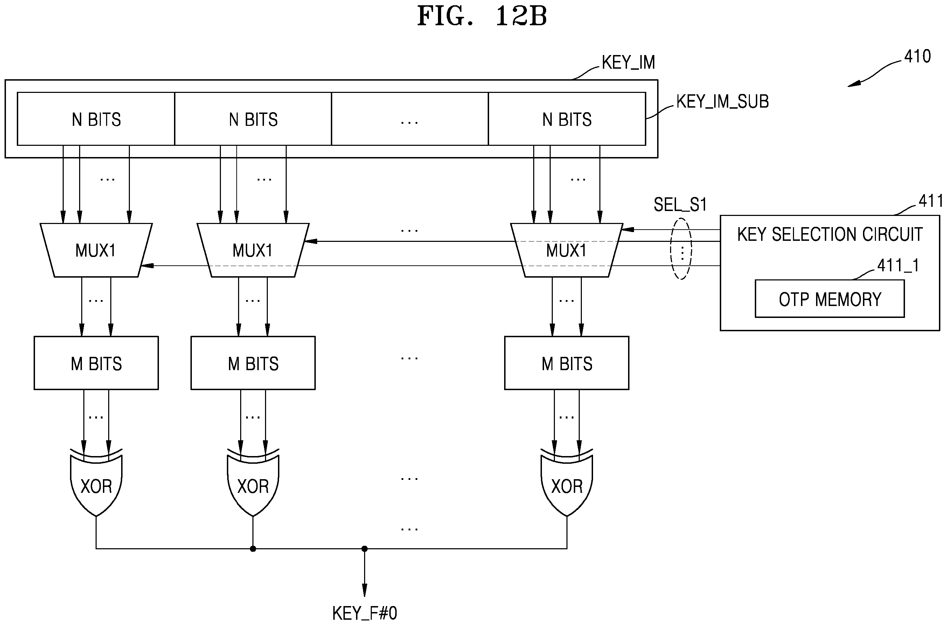

FIGS. 12A and 12B are block diagrams illustrating an example operation of a key management circuit 410.

Referring to FIG. 12A, the key management circuit 410 may include a plurality of first multiplexers MUX1, a plurality of XOR circuits XOR, and a key selection circuit 411. The key management circuit 410 may divide the intermediate key KEY_IM into N-bit units, thereby generating a plurality of sub-intermediate keys KEY_IM_SUB each including N bits. The key selection circuit 411 may generate and output a first selection signal SEL_S1 based on OTP data OTP_DATA received from an OTP memory. The first selection signal SEL_S1 is a signal for generating the first final key KEY_F#0 indicated by the OTP data OTP_DATA and may be input to the plurality of first multiplexers MUX1. The plurality of first multiplexers MUX1 may select and output M-bits for each of the plurality of sub-intermediate keys KEY_IM_SUB based on the first selection signal SEL_S1. The plurality of XOR circuits XOR may perform XOR operations on received M-bits and output XOR operation results, and the XOR operation results may be combined with one another to generate the first final key KEY_F#0.

In some implementations, the values of N and M may vary. In some implementations, the key management circuit 410 may control the number of final keys that may be generated from the intermediate key KEY_IM by adjusting the values of N and M. Also, in some implementations, the key management circuit 410 may adjust the values of N and M to match the characteristics of a security device that requested a security key, thereby generating the first final key KEY_F#0 suitable for the security device as the security key.

Further referring to FIG. 12B, unlike in FIG. 12A, the key selection circuit 411 may include an OTP memory 411_1 and generate the first selection signal SEL_S1 based on OTP data stored in the OTP memory 411_1.

Meanwhile, FIGS. 12A and 12B illustrate example implementations of the key management circuit 410 for generating the first final key KEY_F#0 from the intermediate key KEY_IM. However, the present disclosure is not limited thereto, and the key management circuit 410 may be implemented in various ways to generate the first final key KEY_F#0 in various ways.

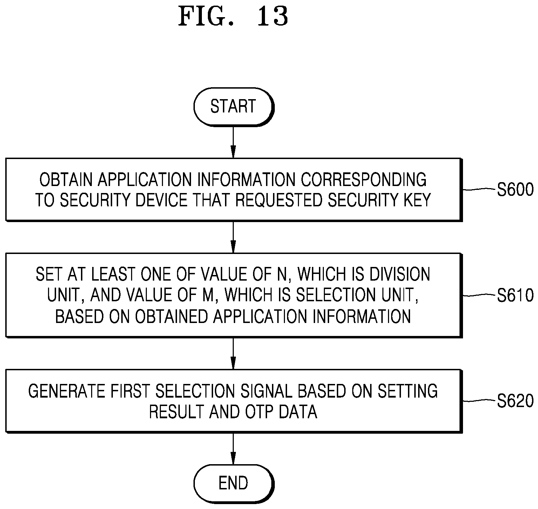

FIG. 13 is a flowchart of an example of a method of operating an integrated circuit.

Referring to FIG. 13, in operation S600, an integrated circuit may obtain application information corresponding to a security device that requested a security key. In some implementations, a security device may perform a security operation by using a security key based on a certain application, and some security devices may perform security operations based on different applications. An integrated circuit may obtain application information corresponding to a security device from the security device or, in an initial setup phase, may collect application information corresponding to a plurality of security devices to be provided with security keys by the integrated circuit. In some implementations, application information may include a security level or security characteristics of an application.

In operation S610, the integrated circuit may set at least one of the value of N, which is the unit of division, and the value of M, which is the unit of selection, described in FIGS. 12A and 12B based on the application information obtained in operation S600. In some implementations, the integrated circuit may set the value of at least one of N and M reflecting obtained application to generate a security key suitable for the obtained application information and provide the security key to the security device.

In operation S620, the integrated circuit may generate a first selection signal for generating a final key based on a setting result of operation S610 and OTP data.

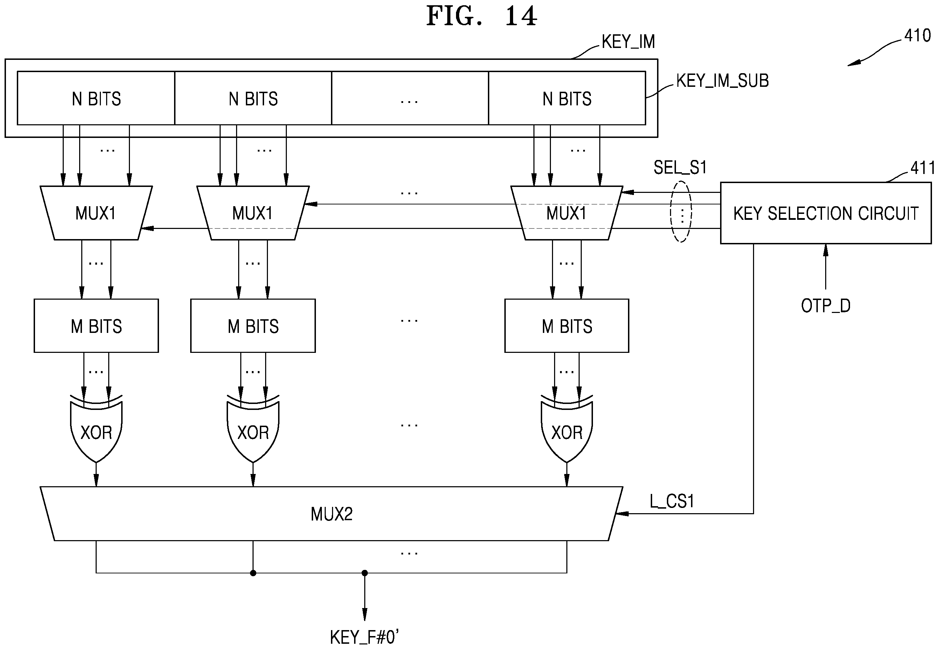

FIG. 14 is a block diagram illustrating an example operation of a key management circuit 410. In FIG. 14, descriptions focuses on differences from the implementation shown in FIG. 12A, and descriptions identical to those given above are omitted.

Referring to FIG. 14, the key management circuit 410 may include the plurality of first multiplexers MUX1, the plurality of XOR circuits XOR, the key selection circuit 411, and a second multiplexer MUX2.

In some implementations, the key selection circuit 411 may generate a first length control signal L_CS1 for adjusting the length of a first final key KEY_F#0' and provides the first final key KEY_F#0' to the second multiplexer MUX2. In some implementations, the key selection circuit 411 may generate the first length control signal L_CS1 to generate the first final key KEY F#0' that satisfies the length of a security key demanded by a security device or suitable for an application being executed on the security device.

In some implementations, the second multiplexer MUX2 may output at least one of XOR operation results received from the plurality of XOR circuits XOR based on the first length control signal L_CS1 and generate the first final key KEY_F#0'.

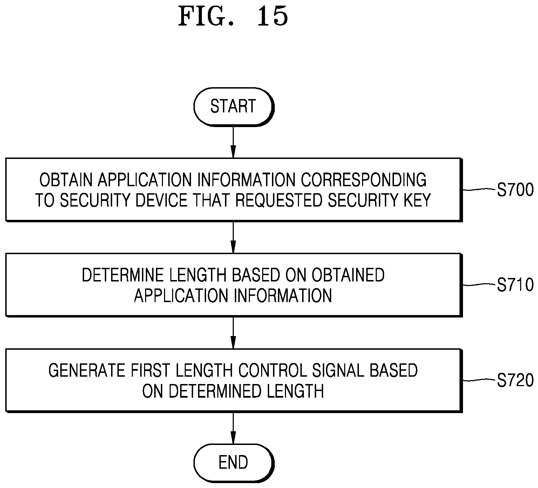

FIG. 15 is a flowchart of an example of a method of operating an integrated circuit.

Referring to FIG. 15, in operation S700, an integrated circuit may obtain application information corresponding to a security device that requested a security key.

In operation S710, the integrated circuit may determine the length of a final key provided as a security key to the security device based on the application information obtained in operation S700.

In operation S720, the integrated circuit may generate a first length control signal based on the length determined in operation S710.

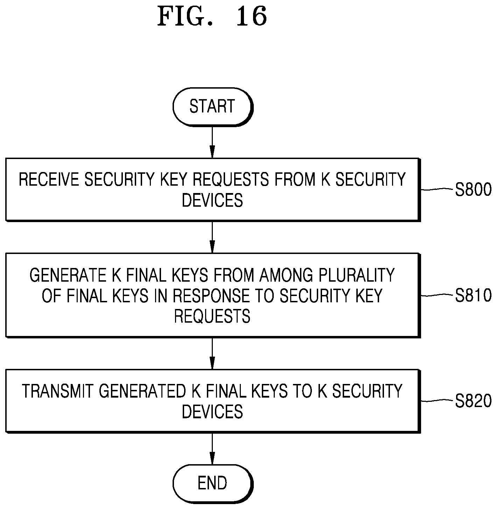

FIG. 16 is a flowchart of an example of a method of operating an integrated circuit.

Referring to FIG. 16, in operation S800, an integrated circuit may receive security key requests from K (here, K is an integer greater than or equal to 2) security devices. In some implementations, the K security devices may each transmit a security key request to the integrated circuit when a security key is needed.

In operation S810, the integrated circuit may generate K final keys from among a plurality of final keys in response to the security key requests. In some implementations, the K final keys may be different from one another. In other words, the integrated circuit may repeatedly use helper data generated in one enrollment phase to generate an intermediate key and generate K final keys from the intermediate key, and thus security keys may be effectively provided to the K security devices, respectively. In some implementations, the K final keys may be customized to suit the security operation of the K security devices, respectively.

In operation S820, the integrated circuit may transmit the K final keys generated in operation S810 to the K security devices. In some implementations, every time a security key request is received, the integrated circuit may generate any one from among final keys that may be generated from the intermediate key and provide a generated final key to the security device that transmitted the security key request.

Since the integrated circuit may generate an intermediate key by using one PUF block and generate various final keys from the intermediate key, the integrated circuit may effectively provide security keys to a plurality of security devices at a low cost and/or a small design area.

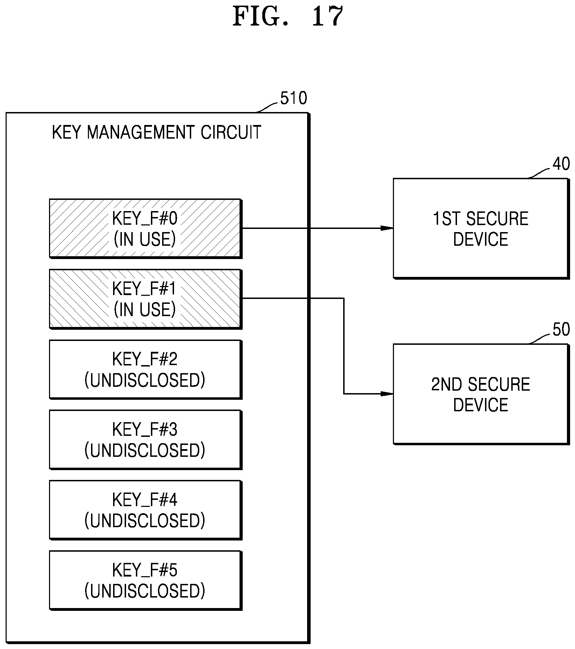

FIG. 17 is a diagram illustrating an example of a method of operating a key management circuit 510. In FIG. 17, it is assumed that six final keys may be generated from an intermediate key. However, it is for convenience of explanation, and the present disclosure is not limited thereto.

Referring to FIG. 17, the key management circuit 510 may manage first to sixth final keys KEY_F#0 to KEY_F#5 that may be generated from an intermediate key. The key management circuit 510 may manage the first final key KEY_F#0 in a state currently being used by a first security device 50 (in-use state) and, when a security key request is received from the first security device 50, generate the first final key KEY_F#0 from an intermediate key and provide the first final key KEY_F#0 to the first security device 50 in response to the security key request. Also, the key management circuit 510 may manage the second final key KEY_F#1 in a state currently being used by a second security device 60 (in-use state) and, when a security key request is received from the second security device 60, generate the second final key KEY_F#1 from the intermediate key and provide the second final key KEY_F#1 to the second security device 60 in response to the security key request.

In some implementations, the generation methods (e.g., the values of N and M of FIG. 12A) and the lengths of the first final key KEY_F#0 and the second final key KEY_F#1 may be the same.

In some implementations, at least one of the generation methods (e.g., the values of N and M of FIG. 12A) and the lengths of the first final key KEY_F#0 and the second final key KEY_F#1 may differ. In other words, at least one of the generation method and the length of the first final key KEY_F#0 may be determined based on application information regarding the first security device 50, and at least one of the generation method and the length of the second final key KEY_F#1 may be determined based on application information regarding the second security device 60.

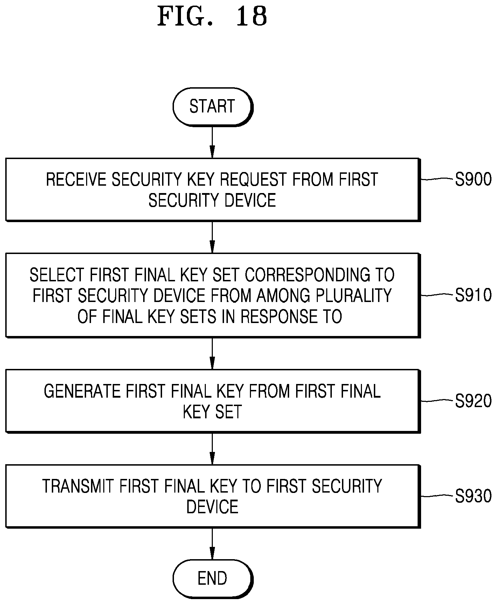

FIG. 18 is a flowchart of an example of a method of operating an integrated circuit.

Referring to FIG. 18, in operation S900, an integrated circuit may receive a security key request from a first security device.

In operation S910, the integrated circuit may select a first final key set corresponding to the first security device from among a plurality of final key sets in response to the security key request. In some implementations, a final key set may be defined as a set including final keys that may be generated from an intermediate key based on the settings of the values of N and M of FIG. 12A. In other words, a plurality of final key sets may be determined according to the values of N and M of FIG. 12A. In detail, for example, to generate a security key to be provided to the first secure device, the integrated circuit may set the values of N and M of FIG. 12A to 4 and 3, respectively, and thus a pool of final keys to be provided to the first secure device may be the first final key set. In this specification, selection of the first final key set may include setting the values of N and M of FIG. 12A corresponding to the first final key set.

In operation S920, the integrated circuit may generate a first final key from the first final key set selected in operation S910.

In operation S930, the integrated circuit may transmit the first final key generated in operation S920 to the first security device as a security key.

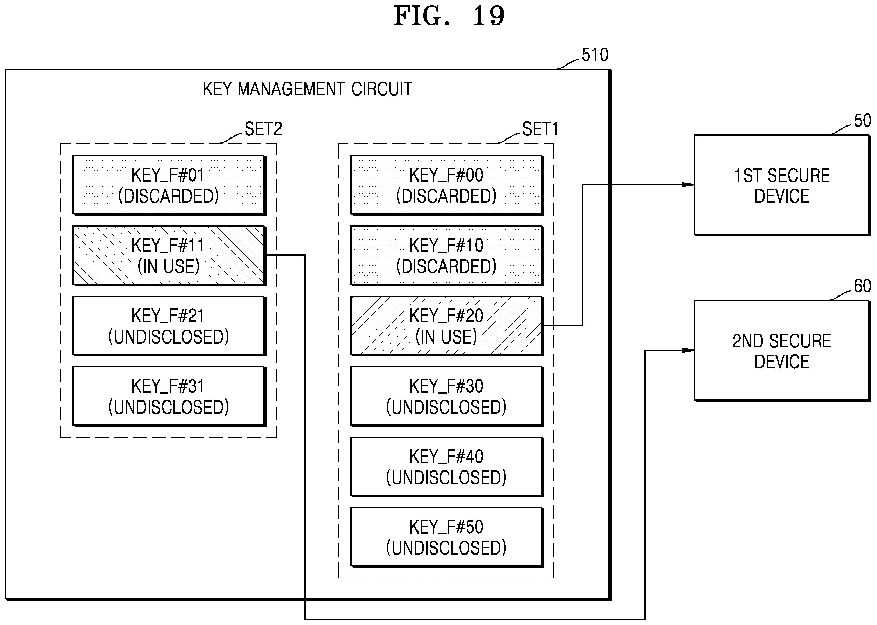

FIG. 19 is a diagram illustrating an example of a method of operating the key management circuit 510. In FIG. 19, it is assumed that six final keys KEY_F#00 to KEY_F#50 are included in a first final key set SET1 and four final keys KEY_F#01 to KEY_F#31 are included in a second final key set SET2. However, it is for convenience of explanation, and the present disclosure is not limited thereto.

Referring to FIG. 19, in response to a security key request of the first security device 50, the key management circuit 510 may generate a 3rd-0 final key KEY_F#20 from among 1st-0 to 6th-0 final keys KEY_F#00 to KEY_F#50 included in the first final key set SET1 and provide the 3rd-0 final key KEY_F#20 to the first security device 50 as a security key. In some implementations, the key management circuit 510 may select the pool of final keys to be provided to the first security device 50 as a security key as the first final key set SET1 by setting the values of N and M of FIG. 12 based on first application information corresponding to the first security device 50. Meanwhile, the key management circuit 510 may discard the 1st-0 final key KEY_F#00 and a 2nd-0 final key KEY_F#10 in the first final key set SET1, as described above.

In response to a security key request of the second security device 60, the key management circuit 510 may generate a 2nd-1 final key KEY_F#21 from among 1st-1 to 4th-1 final keys KEY_F#01 to KEY_F#31 included in the second final key set SET2 and provide the 2nd-1 final key KEY_F#21 to the second security device 60 as a security key. In some implementations, the key management circuit 510 may select the pool of final keys to be provided to the second security device 60 as a security key as the second final key set SET2 by setting the values of N and M of FIG. 12A and 12B based on second application information corresponding to the second security device 60. Meanwhile, the key management circuit 510 may discard the 1st-1 final key KEY_F#01 in the second final key set SET2, as described above.

The key management circuit 510 may generate security keys by changing the pool of final keys according to an application being executed on each of the first security device 50 and the second security device 60.

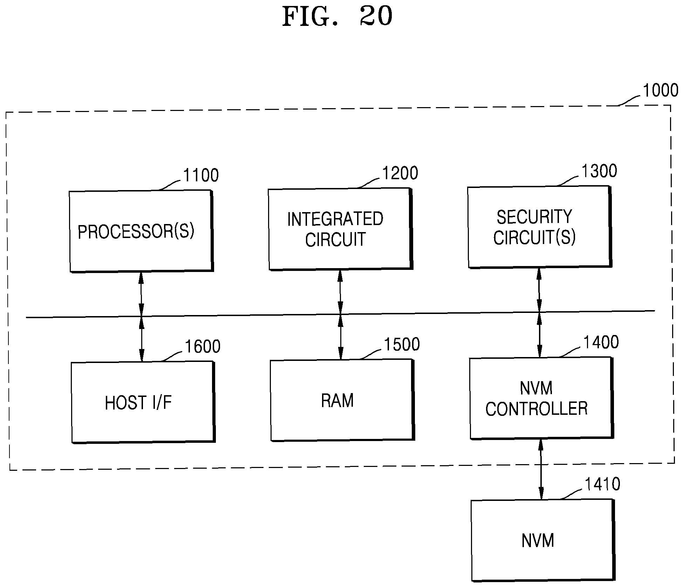

FIG. 20 is a block diagram schematically showing an example of an electronic device 1000. In some implementations, the electronic device 1000 may by one of various types of electronic devices for performing encryption or security authentication of data, such as an application processor, a smart card, a mobile device, a data storage medium (e.g., a solid state drive (SSD), a memory stick, a universal flash storage (UFS) device, etc.), a memory card, etc.

Referring to FIG. 20, the electronic device 1000 may include at least one processor 1100, an integrated circuit 1200 supporting a PUF, at least one security circuit 1300, a non-volatile memory (NVM) controller 1400, a RAM 1500, and a host interface 1600. The at least one processor 1100 and the at least one security circuit 1300 may correspond to the above-described security device and may receive a security key from the integrated circuit 1200 according to the implementations shown in FIGS. 1 to 19.

The processor 1100 may control the overall operation of the electronic device 1000. The processor 1100 may be implemented as a central processing unit (CPU), a microprocessor, etc., and may include a single processor core or multiple processor cores. Meanwhile, the electronic device 1000 may further include a neural network processing unit (NPU) or a graphics processing unit (GPU).

The RAM 1500 may operate as a working memory of the internal system of the electronic device 1000. The RAM 1500 may include at least one of a volatile memory or a non-volatile memory. Codes and/or applications for managing/operating the electronic device 1000 may be loaded into the RAM 1500, and the processor 1100 may execute the codes and/or the applications loaded into the RAM 1500. At this time, the codes and/or the applications may be stored in a NVM 1410 or a separate storage.

The host interface 1600 may be connected to an input/output device via an RGB interface, a CPU interface, a serial interface, a mobile display digital interface (MDDI), an inter integrated circuit (I2C) interface, a serial peripheral interface (SPI), a micro controller unit (MCU) interface, a mobile industry processor interface (MIPI), an embedded DisplayPort (eDP) interface, a D-subminiature (D-sub) interface, an optical interface, a high definition multimedia interface (HDMI), a mobile high-definition link (MHL) interface, a secure digital (SD) card/multi-media card (MMC) interface, or an infrared data association (IrDA) interface, etc.

The NVM controller 1400 may provide interfaces between the NVM 1410 and other components of the electronic device 1000 (e.g., the processor 1100, the integrated circuit 1200, the security circuit 1300, etc.). Data to be stored in the NVM 1410 or data to be read from the NVM 1410 may be received by the NVM 1410 or read from the NVM 1410 under the control of the NVM controller 1400.

The NVM 1410 may include one from among a read only memory (ROM), a programmable ROM (PROM), an electrically programmable ROM (ERPOM), an electrically erasable and programmable ROM (EEPROM), a flash memory, a phase-change random access memory (PRAM), a magnetic RAM (MRAM), a resistive RAM (RRAM), and a ferroelectric RAM (FeRAM). Codes and/or applications for managing/operating the electronic device 1000 may be stored in the NVM 1410, and user data may also be stored in the NVM 1410.

The processor 1100, the security circuit 1300, and the NVM controller 1400 may perform encryption and decryption operations on input/output data using a security key provided from the integrated circuit 1200.

The integrated circuit 1200 may generate an intermediate key by sequentially performing an error correction operation and a length extension operation on an initial key and provide at least one of a plurality of final keys that may be generated from the intermediate key to at least one of the processor 1100, the security circuit 1300, and the NVM controller 1400. The integrated circuit 1200 may generate final keys respectively suitable for the processor 1100, the security circuit 1300, and the NVM controller 1400 based on respective applications executed on the processor 1100, the security circuit 1300, and the NVM controller 1400 and provide generated final keys as security keys.

The configurations and operation methods of an integrated circuit described with reference to FIGS. 1 to 19 may be applied to the integrated circuit 1200 that supports PUF. The integrated circuit 1200 may be implemented in hardware, a combination of hardware and software, or a combination of hardware and firmware.

Some embodiments may, advantageously, generate the multiple final keys without increasing the number of PUF cells required. Additionally or alternatively, some embodiments may advantageously change a security key in use to another security key, preferably in the middle.

Embodiments are set out in the following clauses:
Clause 1. An integrated circuit configured to support a physically unclonable function (PUF), the integrated circuit comprising:
   a PUF block comprising a PUF cell array; and
   a controller configured to generate a security key based on PUF data, the PUF data generated based on the PUF block,
   wherein the controller is configured to
      perform an error correction operation on the PUF data, thereby generating an initial key,
      perform a length extension operation on the initial key, thereby generating an intermediate key, and
      generate, from the intermediate key, at least one final key of a plurality of final keys as the security key.
Clause 2. The integrated circuit of clause 1, wherein the error correction operation on the PUF data is based on helper data, the helper data generated in an enrollment phase and a decoding scheme, and
   wherein the length extension operation on the initial key is based on the helper data and a length extension scheme.
Clause 3. The integrated circuit of clause 2, wherein the decoding scheme is associated with the length extension scheme.
Clause 4. The integrated circuit of any one of clauses 1 to 3, wherein the error correction operation on the PUF data comprises:
   a bit decoding operation that masks the PUF data based on first helper data and applies a majority voting scheme to a masking result; and
   a block decoding operation that performs an XOR operation on a part of a result of the bit decoding operation and second helper data and applies a bose-chaudhuri-hocquenghem (BCH) decoding scheme to a remaining part of the result of the bit decoding operation.
Clause 5. The integrated circuit of clause 4, wherein the length extension operation on the initial key comprises:
   a block encoding operation that applies a BCH encoding scheme to the initial key, performs an XOR operation on a result of the applying of the BCH encoding scheme and the second helper data, and combines the initial key with a result of the XOR operation; and
   a bit encoding operation that applies a repetitive scheme to a result of the block encoding operation and masks a result of applying the repetitive scheme based on the first helper data.
Clause 6. The integrated circuit of any one of clauses 1 to 5, wherein the PUF data comprises data output from a plurality of valid PUF cells of the PUF cell array.
Clause 7. The integrated circuit of any one of clauses 1 to 6, wherein a number of bits of the intermediate key matches a number of bits of the PUF data.
Clause 8. The integrated circuit of any one of clauses 1 to 7, wherein the at least one final key of the plurality of final keys comprises a first final key to be provided to a first security device, and
   wherein the controller is configured to manage the first final key to be switched from an in-use state to a discarded state based on the first final key satisfying a certain invalidity condition.
Clause 9. The integrated circuit of clause 8, wherein the integrated circuit comprises a one-time programmable (OTP) memory configured to store data that generates the at least one final key of the plurality of final keys, and
   wherein the controller is configured to perform a program operation on the OTP memory, such that the first final key in the discarded state is not generated.
Clause 10. The integrated circuit of clause 8, wherein the plurality of final keys comprise a second final key, and
   wherein the controller is configured to
   generate the second final key instead of the first final key in the discarded state, and
   provide the second final key to the first security device.
Clause 11. The integrated circuit of any one of clauses 1 to 10, wherein the at least one final key of the plurality of final keys comprises a first final key, and
   wherein the controller is configured to:
   divide the intermediate key into N-bit units, thereby generating a plurality of sub-intermediate keys, N being an integer greater than or equal to 2; and
   generate the first final key based on combining results of an XOR operation between M-bits selected from each sub-intermediate key of the plurality of sub-intermediate keys, M being an integer less than or equal to N.
Clause 12. The integrated circuit of clause 11, wherein the controller is configured to set, based on application information corresponding to a security device that receives the first final key, at least one of a value of N and a value of M.
Clause 13. The integrated circuit of clause 11 or 12, wherein the controller is configured to adjust a length of the first final key based on selectively combining some of the XOR operation results.
Clause 14. The integrated circuit of any one of clauses 1 to 13, wherein the at least one final key of the plurality of final keys comprises a first final key to be provided to a first security device and a second final key to be provided to a second security device.
Clause 15. An operation method of an integrated circuit comprising a physically unclonable function (PUF) block, the method comprising:
   receiving a first request for a first security key from a first security device;
   generating a first final key from a plurality of final keys based on the first request; and
   transmitting the first final key as the first security key to the first security device,
   wherein the plurality of final keys are based on an intermediate key corresponding to a result of a length extension operation on an initial key, and
   wherein the initial key matches a result of an error correction operation on PUF data generated based on the PUF block.

While this specification contains many specific implementation details, these should not be construed as limitations on the scope of any invention or on the scope of what may be claimed, but rather as descriptions of features that may be specific to particular implementations of particular inventions. Generally, features that are described in this specification in the context of separate implementations can also be implemented in combination in a single implementation. Conversely, various features that are described in the context of a single implementation can also be implemented in multiple implementations separately or in any suitable subcombination. Moreover, although features may be described above as acting in some combinations, one or more features from a combination can in some cases be excised from the combination, and the combination may be directed to a subcombination or variation of a subcombination.

While the present disclosure has been shown and described with reference to implementations thereof, it will be understood that various changes in form and details may be made therein without departing from the scope of the following claims.

## Claims

1. An integrated circuit for supporting a physically unclonable function (PUF), the integrated circuit comprising:
a PUF block comprising a PUF cell array; and
a controller configured to generate a security key based on PUF data, the PUF data generated based on the PUF block,
wherein the controller is configured to
perform an error correction operation on the PUF data, thereby generating an initial key,
perform a length extension operation on the initial key, thereby generating an intermediate key, and
generate, from the intermediate key, a plurality of final keys and select at least one final key of the plurality of final keys as the security key.

2. The integrated circuit of claim 1, wherein the error correction operation on the PUF data is based on helper data, the helper data generated in an enrollment phase and a decoding scheme, and
wherein the length extension operation on the initial key is based on the helper data and a length extension scheme.

3. The integrated circuit of claim 2, wherein the decoding scheme is associated with the length extension scheme.

4. The integrated circuit of any one of claims 1 to 3, wherein the error correction operation on the PUF data comprises:
a bit decoding operation that masks the PUF data based on first helper data and applies a majority voting scheme to a masking result; and
a block decoding operation that performs an XOR operation on a part of a result of the bit decoding operation and second helper data and applies a bose-chaudhuri-hocquenghem (BCH) decoding scheme to a remaining part of the result of the bit decoding operation.

5. The integrated circuit of claim 4, wherein the length extension operation on the initial key comprises:
a block encoding operation that applies a BCH encoding scheme to the initial key, performs an XOR operation on a result of the applying of the BCH encoding scheme and the second helper data, and combines the initial key with a result of the XOR operation; and
a bit encoding operation that applies a repetitive scheme to a result of the block encoding operation and masks a result of applying the repetitive scheme based on the first helper data.

6. The integrated circuit of any one of claims 1 to 5, wherein the PUF data comprises data output from a plurality of valid PUF cells of the PUF cell array.

7. The integrated circuit of any one of claims 1 to 6, wherein a number of bits of the intermediate key matches a number of bits of the PUF data.

8. The integrated circuit of any one of claims 1 to 7, wherein the at least one final key of the plurality of final keys comprises a first final key to be provided to a first security device, and
wherein the controller is configured to manage the first final key to be switched from an in-use state to a discarded state based on the first final key satisfying a certain invalidity condition.

9. The integrated circuit of claim 8, wherein the integrated circuit comprises a one-time programmable (OTP) memory configured to store data that generates the at least one final key of the plurality of final keys, and
wherein the controller is configured to perform a program operation on the OTP memory, such that the first final key in the discarded state is not generated.

10. The integrated circuit of claim 8, wherein the plurality of final keys comprise a second final key, and
wherein the controller is configured to
generate the second final key instead of the first final key in the discarded state, and
provide the second final key to the first security device.

11. The integrated circuit of any one of claims 1 to 10, wherein the at least one final key of the plurality of final keys comprises a first final key, and
wherein the controller is configured to:
divide the intermediate key into N-bit units, thereby generating a plurality of sub-intermediate keys, N being an integer greater than or equal to 2; and
generate the first final key based on combining results of an XOR operation between M-bits selected from each sub-intermediate key of the plurality of sub-intermediate keys, M being an integer less than or equal to N.

12. The integrated circuit of claim 11, wherein the controller is configured to set, based on application information corresponding to a security device that receives the first final key, at least one of a value of N and a value of M.

13. The integrated circuit of claim 11 or 12, wherein the controller is configured to adjust a length of the first final key based on selectively combining some of the XOR operation results.

14. The integrated circuit of any one of claims 1 to 13, wherein the at least one final key of the plurality of final keys comprises a first final key to be provided to a first security device and a second final key to be provided to a second security device.

15. An operation method of an integrated circuit comprising a physically unclonable function (PUF) block, the method comprising:
receiving a first request for a first security key from a first security device;
generating a first final key from a plurality of final keys based on the first request; and
transmitting the first final key as the first security key to the first security device,
wherein the plurality of final keys are based on an intermediate key corresponding to a result of a length extension operation on an initial key, and
wherein the initial key matches a result of an error correction operation on PUF data generated based on the PUF block.
